(19) Europäisches Patentamt
European Patent Office
Office européen des brevets

(11) **EP 4 199 634 A1**

(12) **EUROPEAN PATENT APPLICATION**
published in accordance with Art. 153(4) EPC

(43) Date of publication:
**21.06.2023 Bulletin 2023/25**

(21) Application number: **21858538.8**

(22) Date of filing: **13.08.2021**

(51) International Patent Classification (IPC):
**H04W 74/08** (2009.01)    **H04W 74/00** (2009.01)
**H04W 72/12** (2023.01)    **H04W 72/14** (2009.01)
**H04W 36/00** (2009.01)

(52) Cooperative Patent Classification (CPC):
**H04W 36/00; H04W 72/12; H04W 72/23;**
**H04W 74/00; H04W 74/08**

(86) International application number:
**PCT/KR2021/010801**

(87) International publication number:
**WO 2022/039451 (24.02.2022 Gazette 2022/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.08.2020 US 202063066813 P**

(71) Applicant: **LG ELECTRONICS, INC.**
**Seoul 07336 (KR)**

(72) Inventors:
• **KIM, Seonwook**
**Seoul 06772 (KR)**
• **AHN, Joonkui**
**Seoul 06772 (KR)**
• **KO, Hyunsoo**
**Seoul 06772 (KR)**
• **KIM, Byounghoon**
**Seoul 06772 (KR)**

(74) Representative: **Katérle, Axel**
**Wuesthoff & Wuesthoff**
**Patentanwälte PartG mbB**
**Schweigerstraße 2**
**81541 München (DE)**

(54) **METHOD AND DEVICE FOR PERFORMING RANDOM ACCESS PROCEDURE IN WIRELESS COMMUNICATION SYSTEM**

(57)    Disclosed are a method and device for performing a random access procedure in a wireless communication system. The method for performing a random access procedure by a terminal, according to one embodiment of the present disclosure, comprises the steps of: receiving from a base station, a command for performing a random access procedure for a target cell; and transmitting, to the base station, on the basis of the command, a first message comprising a physical random access channel (PRACH), before acquiring a system frame number (SFN) of the target cell, wherein a time window for attempting reception of a second message responding to the first message is set for the terminal, and the length of the time window can be set to be a value greater than a preset value.

FIG.10

RECEIVING, FROM A BASE STATION, A COMMAND FOR PERFORMING A RANDOM ACCESS PROCEDURE FOR A TARGET CELL ~ S1010

TRANSMITTING, TO THE BASE STATION, A FIRST MESSAGE INCLUDING A PRACH BEFORE OBTAINING A SFN OF THE TARGET CELL BASED ON THE COMMAND ~ S1020

EP 4 199 634 A1

**Description**

[Technical Field]

The present disclosure relates to a wireless communication system, and more particularly, to a method and apparatus for performing a random access procedure in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and apparatus for performing a random access procedure.

Also, an additional technical problem of the present disclosure is to provide a method and apparatus for performing a random access procedure by transmitting a first message including a physical random access channel before obtaining a system frame number of a target cell.

The technical objects to be achieved by the present disclosure are not limited to the above-described technical objects, and other technical objects which are not described herein will be clearly understood by those skilled in the pertinent art from the following description.

[Technical Solution]

A method for performing a random access procedure by a terminal in a wireless communication system according to an embodiment of the present disclosure may include: receiving, from a base station, a command for performing the random access procedure for a target cell; and transmitting, to the base station, a first message including a physical random access channel (PRACH) before obtaining a system frame number (SFN) of the target cell based on the command, and a time window for attempting to receive a second message in response to the first message may be configured for the UE and a size of the time window may have a value greater than a preconfigured value.

A method for performing a random access procedure by a base station in a wireless communication system according to an embodiment of the present disclosure may include: transmitting, to a user equipment (UE), a command for performing the random access procedure for a target cell; and receiving, from the UE, a first message including a physical random access channel (PRACH) before obtaining a system frame number (SFN) of the target cell based on the command, and a time window for attempting to receive a second message in response to the first message may be configured for the UE and a size of the time window may have a value greater than a preconfigured value.

[Technical Effects]

According to one embodiment of the present disclosure, it may reduce latency that may occur in a handover process or to reduce implementation burden of a user equipment (UE) required to decode a master information block of a target cell.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of performing a contention-based random access procedure in a wireless communication system to which the present disclosure may be applied.
FIG. 8 illustrates a method of performing a non-contention based random access procedure in a wireless communication system to which the present disclosure may be applied.
FIG. 9 illustrates a wireless communication system supporting an unlicensed band to which the present disclosure may be applied.
FIG. 10 illustrates a method for a UE to perform a random access procedure in a wireless communication system to which the present disclosure may be applied.
FIG. 11 illustrates a method for a base station to perform a random access procedure in a wireless communication system to which the present disclosure may be applied.
FIG. 12 is a diagram for describing a signaling procedure of a network side and a UE according to the present disclosure.
FIG. 13 illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power

- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

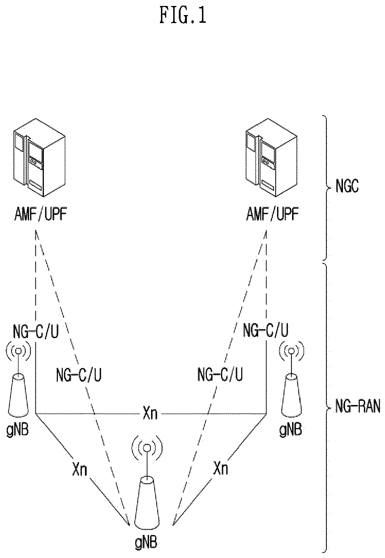

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

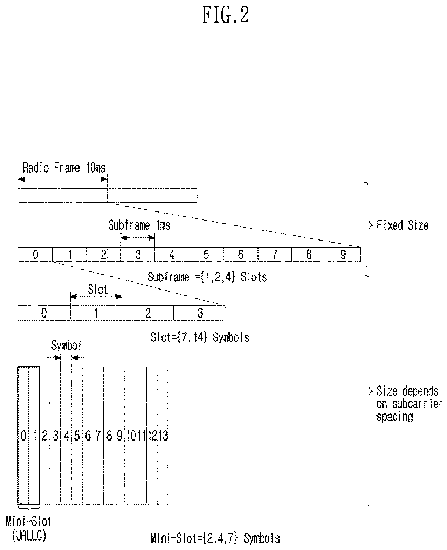

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

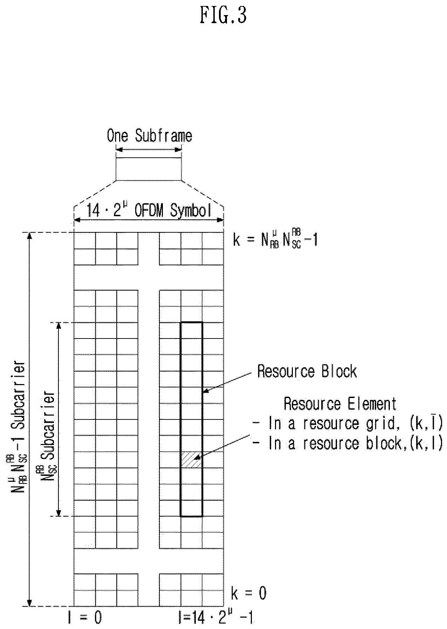

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

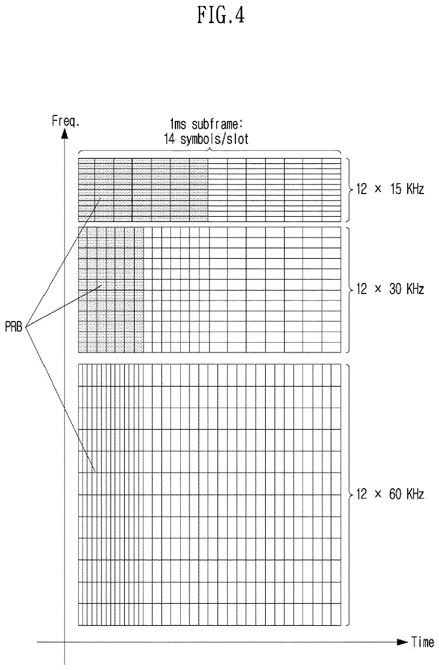

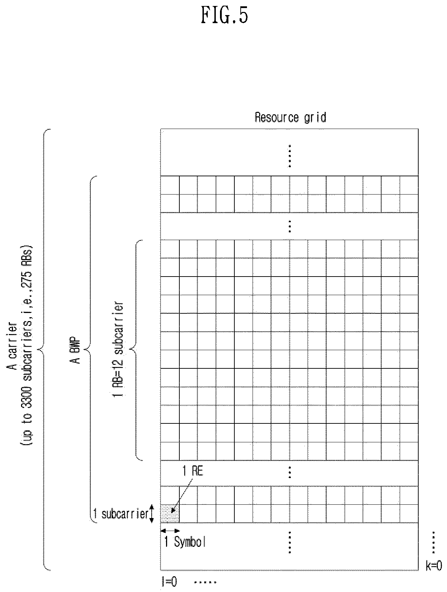

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

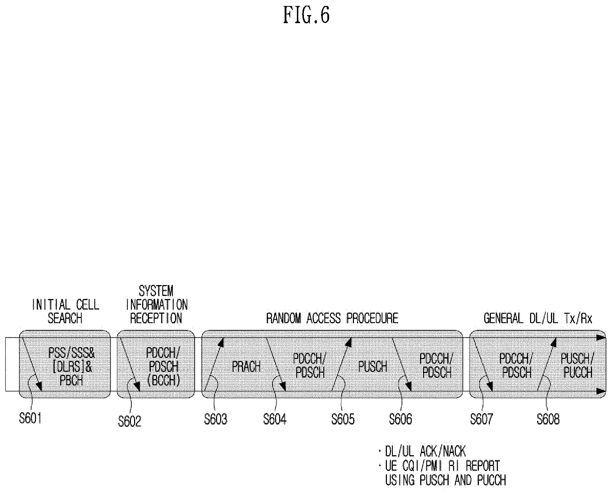

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Random access procedure

The random access procedure may be used for various purposes and in various situations. For example, the random access procedure may be used in a network initial access, handover, or UE-triggered uplink data transmission procedure. The terminal may acquire uplink synchronization and uplink transmission resources through a random access procedure. The random access procedure is divided into a contention-based procedure and a non-contention based procedure (or, or a dedicated procedure). Here, in describing the present disclosure, a random access procedure may be used interchangeably with a random access channel (RACH) procedure.

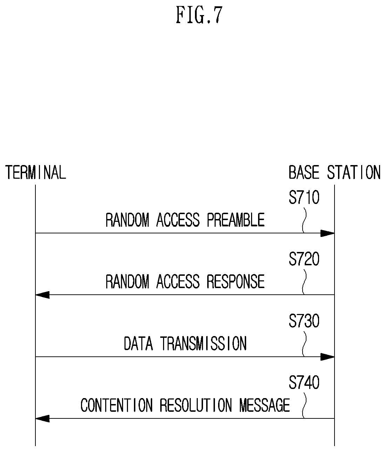

FIG. 7 illustrates an example of a contention-based random access procedure in a wireless system to which the present disclosure may be applied.

Referring to FIG. 7, a terminal may receive information about random access from a base station through system information (e.g., a master information block (MIB) or a system information block (SIB)). After that, if random access is required, the terminal may transmit a random access preamble (i.e., message 1 (msg1)) to the base station (S710). For example, the terminal may transmit the random access preamble to the base station through a physical random access channel (PRACH).

When the random access preamble is received from the terminal, the base station may transmit a random access response (RAR) message (i.e., message 2 (msg2)) to the terminal (S720).

Specifically, scheduling information for the random access response message is CRC masked (or scrambled) with RA-RNTI (random access-radio network temporary identifier), and L1/L2 control channel (e.g., L1 control channel may include PDCCH, etc., and the L2 control channel may be transmitted on a common control channel (CCCH) or the like). The PDCCH masked with RA-RNTI can be transmitted only through a common search space.

Upon receiving the scheduling signal masked with the RA-RNTI, the terminal may receive a random access response message from the PDSCH indicated by the scheduling information. After that, the terminal may check whether random access response information indicated to the terminal itself is included in the random access response message. The process of checking whether random access response information indicated to the terminal itself exists includes checking whether a random access preamble ID (RAPID) corresponding to the random access preamble transmitted by the terminal exists in the random access response message. The random access response information may include timing offset information for UL synchronization(e.g., timing advance command (TAC)), uplink scheduling information (e.g., uplink grant), and terminal temporary identification information (e.g., temporary-cell-RNTI, TC-RNTI).

When random access response information is received, the terminal may transmit uplink-shared channel (UL-SCH) data (i.e., message (msg) 3) to the base station through the PUSCH based on the uplink scheduling information (S730). After receiving the UL-SCH data, the base station may transmit a contention resolution message (i.e., message (msg) 4) to the terminal (S740).

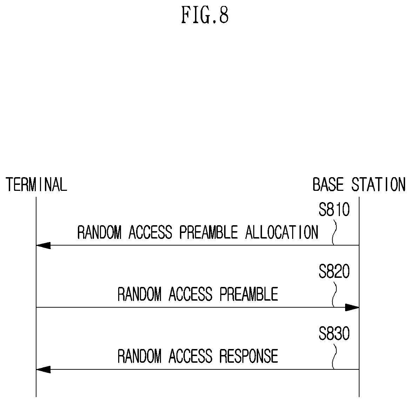

FIG. 8 illustrates an example of a non-contention based random access procedure in a wireless system to which the present disclosure may be applied.

The non-contention based random access procedure may be used in a handover process or may be performed when separately requested by a command of the base station. The basic procedure of the non-contention based random access procedure is the same as that of the contention based random access procedure.

Referring to FIG. 8, a terminal may be allocated a dedicated random access preamble from a base station (S810). Information indicating the dedicated random access preamble (e.g., preamble index) may be included in an RRC message (e.g., handover command) or received through a PDCCH order.

After starting the random access procedure, the terminal may transmit a dedicated random access preamble to the base station (S820). Thereafter, the random access procedure may be terminated when the terminal receives a random access response from the base station (S830). A random access procedure on a secondary cell (SCell) may be initiated only by a PDCCH order.

In the NR system, DCI format 1_0 may be used to initiate a non-contention based random access procedure through a PDCCH order. DCI format 1_0 may be used to schedule PDSCH in one downlink cell.

Additionally or alternatively, when the cyclic redundancy check (CRC) of DCI format 1_0 is scrambled by C-RNTI and the bit values of the frequency domain resource assignment field are all 1, DCI format 1_0 may be used as a PDCCH order indicating a random access procedure. In this case, in DCI format 1_0, a random access preamble index field (e.g., 6 bit), an uplink/supplementary uplink (SUL) indicator field (e.g., 1 bit), an SSB index field (e.g., 6 bit), a PRACH mask index field (e.g., 4 bit), and a reserved field (e.g., 10 bit) may be exemplarily configured.

Here, when all bit values of the random access preamble index are not 0 and supplementary uplink is configured in the cell for the terminal, the uplink/supplementary uplink indicator field may indicate an uplink carrier through which PRACH is transmitted in a cell. In other cases, the uplink/supplementary uplink indicator field may be reserved.

In addition, the SSB index field may indicate an SSB used to determine a RACH occasion for PRACH transmission when all bit values of the random access preamble index are not 0. In other cases, the SSB index may be unused.

The PRACH mask index may indicate a RACH occasion associated with the SSB indicated by the SSB index when all bit values of the random access preamble index are not 0. In other cases, the PRACH mask index may be unused.

Additionally or alternatively, when DCI format 1_0 does not correspond to a PDCCH order, DCI format 1_0 is configured as a field used for scheduling a PDSCH. For example, DCI format 1_0 may include a time domain resource assignment field, a modulation coding configuration (MCS) field, a HARQ process number field, and a PDSCH-to-HARQ feedback time indicator field.

Wireless communication system supporting unlicensed band/shared spectrum

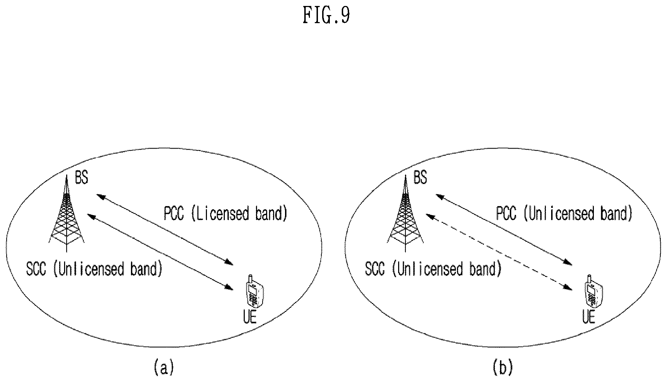

Figure 9 shows an example of a wireless communication system supporting an unlicensed band applicable to the present disclosure. For example, FIG. 9 illustrates an unlicensed spectrum (NR-U) wireless communication system.

In the following description, a cell operating in a licensed-band (L-band) is defined as an LCell, and a carrier of the LCell is defined as a (downlink/uplink) LCC. In addition, a cell operating in an unlicensed band (U-band) is defined as a UCell, and a carrier of the UCell is defined as a (downlink/uplink) UCC. The carrier/carrier-frequency of a cell may mean an operating frequency (e.g., center frequency) of the cell. A cell/carrier (e.g., a component carrier (CC)) is collectively referred to as a cell.

As shown in (a) of FIG. 9, when a terminal and a base station transmit and receive signals through carrier aggregation (CA) LCC and UCC, the LCC may be configured as a primary CC (PCC) and the UCC may be configured as a secondary CC (SCC). And, as shown in (b) of FIG. 9, the terminal and the base station may transmit and receive signals through one UCC or a plurality of UCCs combined with carriers. That is, the terminal and the base station may transmit and receive signals only through UCC(s) without LCC. For standalone operation, PRACH, PUCCH, PUSCH, SRS transmission, etc. may be supported in UCell.

For example, the unlicensed band may be included in a specific frequency range (e.g., from 52.6 GHz to 71 GHz) higher than the existing frequency range (e.g., FR1 and FR2). The specific frequency range may be referred to as FR2-2 (in this case, the existing FR2 (i.e., 24250 MHz - 52600 MHz) may be referred to as FR2-1) or may be referred to as FR3. The scope of this disclosure is not limited to the designations FR2-2 or FR3.

Hereinafter, the method proposed in the present disclosure will be described in detail.

In the case of a type 1 (or 4-step) random access procedure during operation of an existing UE, after transmitting the PRACH, the UE may attempt to detect DCI format 1_0 CRC scrambled with the corresponding RA-RNTI during the (RAR) window. Here, the (RAR) window may start from the first symbol of the most recent CORESET configured to receive a PDCCH for a type 1 PDCCH CSS set after the last symbol of a PRACH occasion corresponding to RRACH transmission. In addition, the length of the (RAR) window based on the subcarrier spacing (SCS) for the type 1 PDCCH CSS set may be provided by an upper layer parameter (e.g., 'ra-ResponseWindow', etc.).

If DCI format 1_0 CRC scrambled by the corresponding RA-RNTI is detected, the least significant bit (LSB) field of the system frame number (SFN) included in DCI format 1_0 is the same as the corresponding LSB of the SFN transmitted by the PRACH, and the UE receives a transport block including the corresponding PDSCH within the (RAR) window, the UE may pass the transport block to a higher layer.

In addition, if DCI format 1_0 CRC scrambled by the corresponding RA-RNTI is not detected, the least significant bit (LSB) field of the system frame number (SFN) included in DCI format 1_0 is not the same as the corresponding LSB of the SFN to which the UE transmitted the PRACH, the UE does not receive a transport block including the corresponding PDSCH within the window, or the higher layer cannot identify the RAPID related to the PRACH transmitted from the UE, a higher layer may indicate the physical layer to transmit the PRACH.

Additionally or alternatively, in the case of a type 2 (or 2-step) random access procedure during operation of an existing UE, after PRACH and PUSCH transmission (i.e., Msg A (message A) transmission), the UE may attempt to detect the DCI format 1_0 CRC scrambled with the corresponding MsgB-RNTI during the (msgB (message B)) window. Here, the (msgB) window may start from the first symbol of the most recent CORESET configured to receive a PDCCH for a type 1 PDCCH CSS set after the last symbol of a PUSCH occasion corresponding to PUSCH transmission. In addition, the length of the (msgB) window based on the subcarrier spacing (SCS) for the type 1 PDCCH CSS set may be provided by an higher layer parameter (e.g., 'msgB-ResponseWindow', etc.).

If DCI format 1_0 CRC scrambled by the corresponding MsgB-RNTI is detected, the LSBs field of the SFN included in DCI format 1_0 is the same as the corresponding LSB of the SFN to which the UE transmitted the PRACH, and the UE receives a transport block including the corresponding PDSCH within the (msgB) window, the UE may pass the transport block to a higher layer. The higher layer may indicate the physical layer to transmit the PUSCH together with HARQ-ACK information having a higher layer acknowledgment or ACK value.

Additionally or alternatively, if DCI format 1_0 is CRC scrambled with RA-RNTI or MsgB-RNTI, DCI format 1_0 may include a frequency domain resource allocation field, a time domain resource allocation field, a modulation coding configuration field, an LSBs field of SFN, or an unused field.

At this time, if DCI format 1_0 is CRC scrambled with MsgB-RNTI, the LSBs field of SFN may consist of 2 bits if 'msgB-ResponseWindow' is configured to a value of 10 ms or more. And, when DCI format 1_0 is CRC scrambled with RA-RNTI, the LSBs field of SFN may consist of 2 bits if 'ra-ResponseWindow' is set to a value of 10 ms or more. In other cases, the LSBs field of the SFN may be 0 bits.

In order to perform the above-described operation of the existing UE (e.g., operation according to the type 1 or type 2 random access procedure, etc.), if the RAR window (or msgB window) length is configured to greater than 10 msec, the UE may need to determine the SFN of a cell to be camped on (or a target in a handover process) (e.g., through MIB decoding of the corresponding cell).

As an embodiment of the present disclosure (i.e., an embodiment related to an operation according to a type 1 random access procedure), if LSB of SFN #X for that identified cell, and LSB 2 bits of SFN #N indicated in a field included in DCI format 1_0 (e.g., SFN fields of LSBs) masked with the RA-RNTI received within the RAR window corresponding to the PRACH transmitted for the corresponding cell match each other, the UE may consider that the corresponding PRACH transmission has been successfully performed. In addition, the UE may perform the RACH procedure while transmitting msg3 (e.g., RRC connection request) through the uplink resource allocated in the RAR message.

And, if the LSB of SFN #X for the identified cell, and LSB 2 bits of SFN #N indicated in a field included in DCI format 1_0 (e.g., SFN of LSBs) masked with RA-RNTI received within the RAR window corresponding to the PRACH transmitted for the corresponding cell do not match each other, the UE may continue to receive DCI format 1_0 within the RAR window, or may proceed with a PRACH retransmission or cell reselection procedure considering that the PRACH transmission has failed.

As another embodiment of the present disclosure (i.e., an embodiment related to an operation according to a type 2 random access procedure), if the LSB of SFN #X for that cell for which the SFN was identified, and the LSB 2 bits of SFN #N indicated in the field included in DCI format 1_0 (e.g., SFN fields of LSBs) masked with MsgB-RNTI received within the MsgB window corresponding to Message A (Msg A) (i.e., PRACH and PUSCH) transmitted for the cell match each other, the UE may consider that the corresponding PRACH transmission and PUSCH transmission have been successfully performed. And, the UE may perform the RACH procedure while transmitting HARQ-ACK for the message scheduled by the DCI.

In addition, if the LSB of SFN #X for that identified cell and the LSB 2 bits of SFN #N indicated in a field included in DCI format 1_0 (e.g., SFN of LSBs) masked with MsgB-RNTI received within the MsgB window corresponding to MsgA (i.e., PRACH and PUSCH) transmitted for the cell do not match each other, the UE may continue to receive DCI format 1_0 within the MsgB window, consider that at least one of PRACH transmission or PUSCH transmission has failed and performs PRACH and PUSCH retransmission, or perform cell reselection.

In the present disclosure, a method of performing RACH transmission without SFN validation of a target cell in a handover process may be proposed. When RACH transmission is performed without checking the SFN of the target cell during the handover process, latency occurring during the handover process may be reduced or burden of UE implementation for decoding the MIB of the target cell may be reduced.

For example, according to examples of the present disclosure, in a frequency range (e.g., FR2-2 or FR3) to which a larger SCS is applied, the processing burden of a UE that must operate based on a shorter time unit (e.g., symbol or slot) may be alleviated.

Also, according to examples of the present disclosure, for channel access point (CAP) or listen-before-talk (LBT) operation required before starting transmission in unlicensed band, or for the random access procedure to which the increased time window for supporting the increased terminal processing time in the type 2 random access procedure is applied, the UE may perform the random access procedure more quickly.

Embodiment 1

In a handover operation between NR-U cells, cells including NR-U cells, or NR cells, the UE may start the RACH procedure without reading (or without decoding) the MIB of the neighboring cell (or target cell). That is, the UE may perform the process of checking the SFN of the neighboring cell by delaying the RACH transmission.

Specifically, when handover is indicated, the UE may attempt to transmit a PRACH (hereinafter referred to as 1st RACH) through a configured PRACH time/frequency resource before performing MIB decoding on the target cell (or before obtaining SFN information). During the corresponding RAR window, the UE may attempt to receive DCI format 1_0 masked with RA-RNTI from the target cell. When DCI format 1_0 masked with RA-RNTI is received (i.e., when the DCI is detected), even though the RAR window is configured to be larger than 10 msec, since the UE has not yet acquired the SFN information of the target cell, the UE may ignore the LSBs field of the SFN included in the DCI. That is, the UE may perform a series of RACH procedures by checking the RAPID corresponding to the 1st RACH transmitted by the UE in the RAR message without checking the consistency of the LSBs field of the SFN. Here, checking the consistency of the LSBs field of the SFN may mean a process of checking whether the LSBs field of the SFN and the LSB of the SFN (e.g., LSB 2 bits of the SFN) in which the UE transmits the PRACH are the same.

If there is a RAPID corresponding to the 1st RACH in the RAR message and an uplink resource corresponding to the RAPID is indicated, the UE may perform msg3 transmission (e.g., PUSCH transmission) through the indicated uplink resource and proceed with a contention resolution procedure. At this time, the UE may assume that the RAR window has a value of 10 msec (or, length) regardless of the configured RAR window value (or configured RAR window length (length)) (option 1) or may assume the same value as the set window value (option 2).

If option 2 is applied, when the length of the RAR window is configured to 40 msec, the UE may ignore the LSBs field of SFN and attempt to transmit msg3 for each of the plurality of DCIs (i.e., DCI format 1_0 masked with the corresponding RA-RNTI) during the RAR window. For example, when a RAPID corresponding to a PRACH transmitted in a RAR message exists and an uplink resource indicated by the RAPID exists, the UE may transmit msg3 through the indicated uplink resource.

And, the UE, after 1st RACH transmission (or during RACH procedure prior to SFN acquisition), may obtain SFN information through MIB decoding for the target cell. If RAR corresponding to 1st RACH transmission is not received, msg4 (e.g., contention resolution message or RRC connection setup message, etc.) is not received, or contention resolution fails, the UE may perform a retransmission operation of RACH (hereinafter referred to as 2nd RACH).

And, when the UE acquires SFN information through MIB decoding for the target cell after transmitting the 2nd RACH, an SFN validation process (i.e., the process of verifying whether the LSB 2 bits of the SFN and the LSBs field of the SFN in the corresponding DCI match) may be performed on the DCI format 1_0 scrambled with the RA-RNTI detected after transmission of the 2nd RACH based on the SFN information.

Alternatively, when SFN information is acquired through MIB decoding for the target cell after 1st RACH transmission and before corresponding RAR reception, for DCI format 1_0 scrambled with RA-RNTI detected after 1st RACH transmission, a validation process (i.e., a process of verifying whether the LSB 2 bits of the SFN and the LSBs field of the SFN in the corresponding DCI match) may be performed based on the corresponding SFN information.

That is, in the handover process, the UE may perform 1st RACH transmission without MIB decoding for the target cell (i.e., without obtaining SFN information). After the 1st RACH transmission, the UE may perform MIB decoding (or SFN information acquisition) for the (delayed) target cell, and then proceed with the RACH procedure through an SFN validation process.

Embodiment 2

Embodiment 2 is an embodiment in which the RA-RNTI in Embodiment 1 is replaced with MsgB-RNTI and applied (i.e., a type 2 random access procedure is applied).

Specifically, when handover is indicated, the UE may attempt transmission of PRACH (hereinafter referred to as 1ST RACH) and PUSCH (i.e., msg A (message A)) through configured time/frequency resources before performing MIB decoding on the target cell (or before obtaining SFN information). During the corresponding msgB window, the UE may attempt to receive DCI format 1_0 masked with MsgB-RNTI from the target cell.

During the corresponding msgB window, the UE may attempt to receive DCI format 1_0 masked with MsgB-RNTI from the target cell. When DCI format 1_0 masked with MsgB-RNTI is received, the UE may ignore the LSBs field of the SFN included in the DCI. That is, the UE transmits HARQ-ACK information without checking the consistency of the LSBs field of the SFN (i.e., checking whether the LSB 2 bits of the SFN and the LSBs field of the SFN in the corresponding DCI match).

At this time, the UE may assume that the msgB window has a value of 10 msec (or, length) regardless of the configured msgB window value (or configured msgB window length (length)) (option 3) or may assume the same value as the set msgB window value (option 4).

For example, if option 4 is applied, when the length of the msgB window is configured to 40 msec, the UE may attempt to receive a plurality of DCIs (i.e., DCI format 1_0 masked with the corresponding msgB-RNTI) during the msgB window. And, when the RAPID corresponding to the PRACH transmitted as MsgA is included in a plurality of messages scheduled by each of the plurality of DCIs, the UE may transmit HARQ-ACK for each of the plurality of messages.

Additionally or alternatively, in the type 2 random access procedure, the UE may expect only fallback RAR reception by transmitting only PRACH without performing msgA PUSCH transmission. Receiving the fallback RAR by the UE may mean that the UE performs the random access procedure disclosed in Embodiment 1 (i.e., type 1 random access procedure). Specifically, if a fallback RAR is received, the UE may identify whether a RAPID corresponding to the transmitted PRACH exists in the RAR. If the RAPID corresponding to the transmitted PRACH exists in the RAR, the UE may perform msg3 transmission (e.g., PUSCH transmission) based on uplink resources (e.g., uplink grant) included in the RAR.

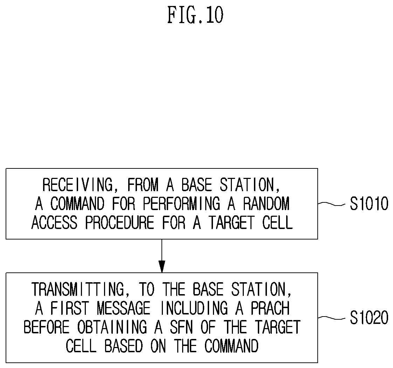

FIG. 10 illustrates a method for a UE to perform a random access procedure in a wireless communication system to which the present disclosure may be applied.

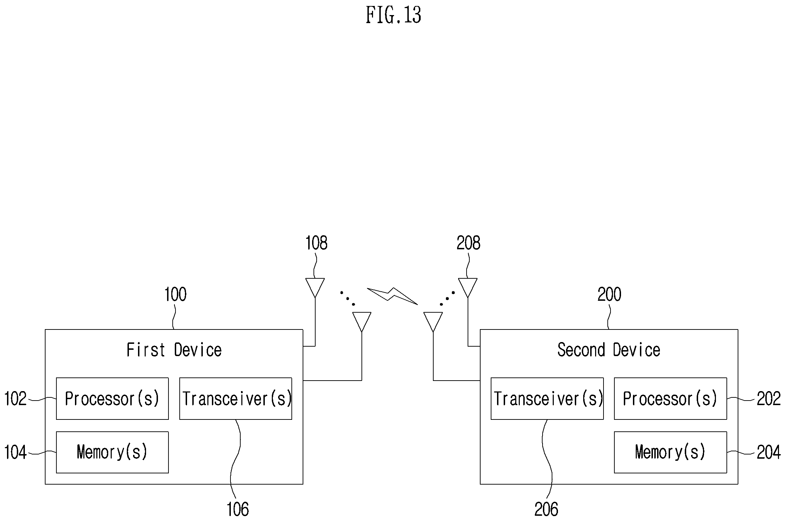

Each step of FIG. 10 described below may be implemented by the first device 100/second device 200 of FIG. 13 to be described later.

Referring to FIG. 10, a UE may receive a command from a base station for performing a random access procedure for a target cell (S1010).

Here, the command may include a command indicating handover to the target cell. For example, the command may be included in higher layer signaling (e.g., RRC signaling) and transmitted to the UE or transmitted to the UE through the PDCCH.

Based on the command, the UE may transmit a first message including a physical random access channel (PRACH) to the base station before obtaining a system frame number (SFN) of the target cell (S1020).

Here, a time window for attempting to receive a second message in response to the first message is set for the UE, the size of the time window may have a larger value than a preconfigured value. In this case, the time window may be a random access response (RAR) window or an MSGB window, but is not limited thereto, and a preconfigured value may be 10 msec or more (e.g., 40 msec).

And, the first message may include PRACH transmission and PUSCH transmission. For example, when the time window configured for the UE is a message B (MSGB) window, the UE may transmit a first message including PRACH transmission and PUSCH transmission to the base station.

During a time window, the UE may receive one or more downlink control information (DCI) scrambled by a cyclic redundancy check (CRC) by a predetermined radio network temporary identifier (RNTI) from the target cell. In this case, the predetermined RNTI may be a random access (RA)-RNTI or a message B (MSGB)-RNTI, but is not limited thereto.

For example, it is assumed that the time window is the RAR window and the predetermined RNTI is the RA-RNTI. When the RAR window is configured to 10 msec or the UE assumes that the RAR window is 10 msec, the UE may attempt to receive DCI scrambled by CRC by RA-RNTI from the target cell. As another example, when the RAR window is configured to 10 msec or more (e.g., 40 msec), the UE may attempt to receive a plurality of DCIs scrambled by the RA-RNTI during the corresponding RAR window.

And, based on the second message scheduled by each of one or more DCIs, including a random access preamble identity (RAPID) corresponding to the PRACH, the UE may perform PUSCH transmission based on uplink grant information included in the second message. Here, PUSCH transmission may be performed regardless of the value of the LSBs field of the SFN included in one or more DCIs.

Additionally or alternatively, after the first message is transmitted to the base station, the UE may acquire the SFN of the target cell. For example, the UE may acquire the SFN of the target cell based on a master information block (MIB) for the target cell (e.g., acquire the SFN by decoding the MIB). As another example, after the first message is transmitted to the base station, the UE may acquire the SFN from the target cell.

In addition, based on the value of the least significant bits (LSBs) field of the SFN of the DCI received within the time window being the same as the LSBs of the obtained SFN of the target cell after the SFN of the target cell is obtained, the UE may transmit the PUSCH based on uplink grant information included in the second message scheduled by the DCI.

As another example, if the LSBs field values of the SFNs of one or more DCIs received within the time window after the SFN of the target cell is obtained are not the same as the obtained LSBs of the SFN of the target cell, the UE may retransmit the first message to the base station. For example, based on the LSB of the SFN of the target cell (e.g., LSB 2 bits of the SFN) being not equal to the value of the LSBs field of the SFN included in the DCI received within the time window, the UE may consider that transmission of the first message has failed.

Additionally or alternatively, if the second message is not received from the base station during the time window, the UE may retransmit the first message. After retransmitting the first message to the base station, the UE may transmit the PUSCH based on whether the LSB of the SFN of the target cell (e.g., LSB 2 bits of SFN) and the LSB field value of the SFN of the DCI received through the target cell during the time window after the first message is retransmitted are the same.

Additionally or alternatively, if the MSGB window is configured for the UE, during the msgB window, the UE may receive one or more DCIs scrambled with msgB-RNTI CRC from the target cell. The UE may transmit HARQ-ACK (hybrid automatic repeat-acknowledgement) for the second message, based on the second message scheduled by each of the one or more DCIs, including a RAPID corresponding to the PRACH.

Additionally or alternatively, if the SFN of the target cell is obtained after the first message transmission, the UE may transmit HARQ-ACK for the second message scheduled by the DCI to the base station, based on the value of the LSBs field of the SFN included in the DCI received within the time window after the SFN of the target cell is obtained being equal to the LSBs of the obtained SFN of the target cell.

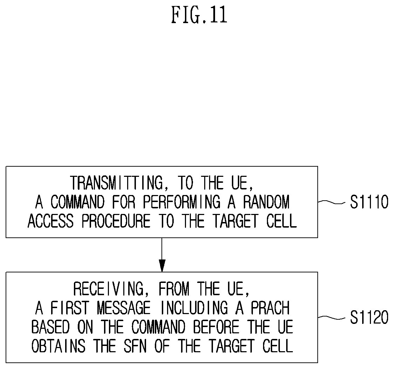

FIG. 11 illustrates a method for a base station to perform a random access procedure in a wireless communication system to which the present disclosure may be applied.

Each step of FIG. 11 described below may be implemented by the first device 100/second device 200 of FIG. 13 to be described later.

Referring to FIG. 11, the base station may transmit a command for performing a random access procedure to the target cell to the UE (S1110).

Here, the command may include a command indicating handover to the target cell. For example, the command may be included in higher layer signaling (e.g., RRC signaling) and transmitted to the UE or transmitted to the UE through the PDCCH.

The base station may receive a first message including a PRACH based on the command from the terminal before the UE obtains the SFN of the target cell (S1120).

Here, a time window for trying to receive a second message in response to the first message is configured for the UE, and the size of the time window may have a larger value than a preset value. In this case, the time window may be a random access response (RAR) window or an MSGB window, but is not limited thereto, and a preset value may be 10 msec or more (e.g., 40 msec).

And, the first message may include PRACH transmission and PUSCH transmission. For example, when the time window configured for the UE is the MSGB window, the UE may transmit a first message including PRACH transmission and PUSCH transmission to the base station.

The base station (or target cell) may transmit one or more downlink control information (DCI) scrambled with a cyclic redundancy check (CRC) with a predetermined radio network temporary identifier (RNTI) to the terminal during a time window. In this case, the predetermined RNTI may be RA (radio access-RNTI or MSGB-RNTI), but is not limited thereto.

For example, it is assumed that the time window is the RAR window and the predetermined RNTI is the RA-RNTI. If the RAR window is configured to 10 msec or the UE assumes the RAR window to be 10 msec, the base station may transmit the CRC scrambled DCI by the RA-RNTI to the UE. As another example, if the RAR window is configured to 10 msec or more (e.g., 40 msec), the base station may transmit a plurality of DCIs scrambled by CRC by RA-RNTI to the UE during the corresponding RAR window.

And, based on the second message scheduled by each of one or more DCIs including a random access preamble identity (RAPID) corresponding to the PRACH, the base station may receive PUSCH transmission based on uplink grant information included in the second message from the UE. Here, PUSCH transmission by the UE may be performed regardless of the value of the LSBs field of the SFN included in one or more DCIs.

Additionally or alternatively, after the first message is transmitted to the base station, the UE may acquire the SFN of the target cell. For example, the UE may acquire the SFN of the target cell based on a master information block (MIB) for the target cell (e.g., acquire the SFN by decoding the MIB). As another example, after the first message is transmitted to the base station, the UE may acquire the SFN from the target cell.

In addition, based on the LSBs field value of the SFN of the DCI received within the time window after the SFN of the target cell is obtained being the same as the LSBs of the acquired SFN of the target cell, the base station may receive PUSCH transmission based on uplink grant information included in the second message scheduled by the DCI from the UE.

As another example, based on the LSBs field value of SFN of one or more DCIs received within the time window after the SFN of the target cell is acquired being not the same as the LSBs of the acquired SFN of the target cell, the terminal may retransmit the first message to the base station. For example, if the LSB of the SFN of the target cell (e.g., LSB 2 bits of the SFN) is not equal to the value of the LSBs field of the SFN included in the DCI received within the time window, the UE may consider that transmission of the first message has failed.

Additionally or alternatively, if the second message is not received from the base station during the time window, the UE may retransmit the first message. After retransmitting the first message to the base station, the UE may transmit the PUSCH based on whether the LSB of the SFN of the target cell (e.g., LSB 2 bits of SFN) and the LSB field value of the SFN of the DCI received through the target cell during the time window after the first message is retransmitted are the same.

Additionally or alternatively, if the MSGB window is configured for the UE, the base station may transmit one or more DCIs scrambled with the MsgB-RNTI CRC to the UE during the msgB window. The UE may transmit an HARQ-ACK for the second message based on the fact that the second message scheduled by each of the one or more DCIs includes a RAPID corresponding to the PRACH.

Additionally or alternatively, if the SFN of the target cell is obtained after the first message transmission, based on the value of the LSBs field of the SFN included in the DCI received within the time window after the SFN of the target cell is obtained being equal to the LSBs of the obtained SFN of the target cell, the UE may transmit HARQ-ACK for the second message scheduled by the DCI to the base station.

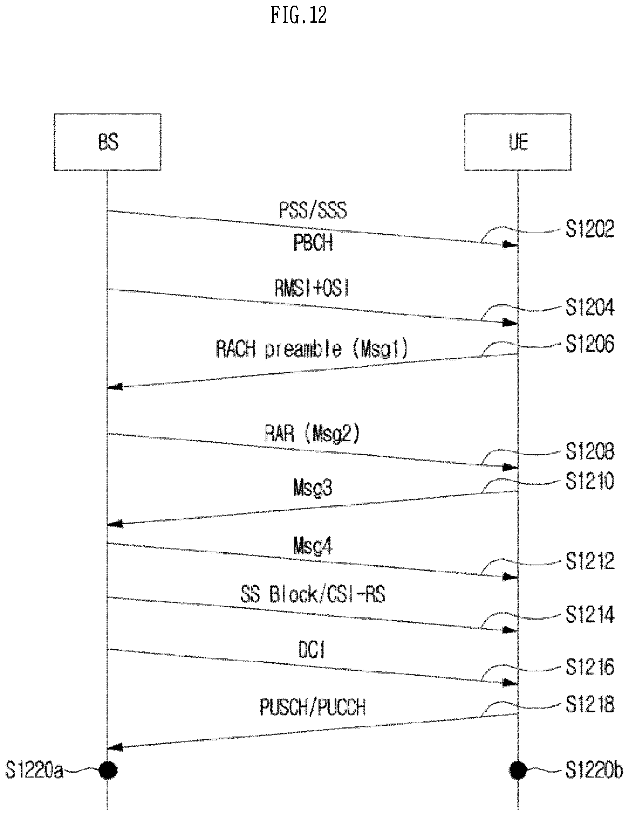

FIG. 12 is a diagram illustrating a signaling method between a UE and a base station for performing a random access procedure according to an embodiment of the present disclosure.

FIG. 12 illustrates an example of signaling between a base station (BS) (or network) and a terminal (UE) to which the embodiments proposed in this disclosure (one or more of the above-described embodiment 1 or embodiment 2) may be applied. Here, the UE/base station is just one example, and may be implemented in various devices.

And, FIG. 12 illustrates a signaling flowchart for convenience of description of the present disclosure, and does not limit the scope of the present disclosure. Also, some of the step(s) illustrated in FIG. 12 may be omitted depending on circumstances and/or settings. In addition, each step described with reference to FIG. 12 may be implemented by the device of FIG. 13 to be described below.

In the following description, a base station may be one base station including a plurality of TRPs, or may be one cell including a plurality of TRPs. For example, an ideal/non-ideal backhaul may be established between TRP 1 and TRP 2 constituting one base station. In addition, although the following description is based on a plurality of TRPs, it can be equally extended and applied to transmission through a plurality of panels/cells.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID). In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.). In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

Referring to FIG. 12, a base station (e.g., BS) may periodically transmit an SSB to a UE (S1202). Here, SSB may include PSS/SSS/PBCH. The base station may transmit the SSB to the UE using beam sweeping.

The base station may transmit remaining minimum system information (RMSI) and other system information (OSI) to the terminal (S1204). The RMSI may include information (e.g., PRACH configuration information) necessary for the UE to initially access the base station. At this time, the UE may identify the best SSB after performing SSB detection.

Thereafter, the UE may transmit a RACH preamble (Message 1, Msg1) to the base station using the PRACH resource linked/corresponding to the index (i.e., beam) of the best SSB (S1206). The beam direction of the RACH preamble may be associated with PRACH resources. Association between a PRACH resource (and/or RACH preamble) and an SSB index may be configured through system information (e.g., RMSI).

Subsequently, as part of the RACH process, the base station may transmit a random access response (RAR) (Msg2) to the UE in response to the RACH preamble (S1208). The UE may transmit Msg3 (e.g., RRC Connection Request) using the uplink grant in RAR (S1210). The base station may transmit a contention resolution message (Msg4) to the UE (S1212). Msg4 may include RRC connection setup.

When RRC connection is established between the base station and the UE through the RACH process, subsequent beam alignment may be performed based on SSB/CSI-RS (in downlink) and SRS (in uplink). For example, the UE may receive SSB/CSI-RS (S1214). SSB/CSI-RS may be used by a UE to generate a beam/CSI report.

And, the base station may request a beam/CSI report from the UE through DCI (S1216). At this time, the UE may generate a beam/CSI report based on SSB/CSI-RS and transmit the generated beam/CSI report to the base station through PUSCH/PUCCH (S1218). The beam/CSI report may include a beam measurement result, information on a preferred beam, and the like. The base station and the UE may switch the beam based on the beam/CSI report (S1220a, S1220b).

After that, the UE and the base station may perform the embodiments described/suggested above. For example, the UE and the base station may process information in a memory to transmit a radio signal or process a received radio signal and store it in a memory according to an embodiment of the present disclosure, based on the configuration information obtained from the network access procedure (e.g., system information acquisition procedure, RRC connection procedure through RACH, etc.). Here, the radio signal may include at least one of PDCCH, PDSCH, and Reference Signal (RS) in case of downlink, and may include at least one of PUCCH, PUSCH, and SRS in case of uplink.

General Device to which the Present Disclosure may be applied

FIG. 13 is a diagram which illustrates a block diagram of a wireless communication system according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machinereadable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform a random access procedure in a wireless communication system, the method comprising:

   receiving, from a base station, a command for performing the random access procedure for a target cell; and
   transmitting, to the base station, a first message including a physical random access channel (PRACH) before obtaining a system frame number (SFN) of the target cell based on the command,
   wherein a time window for attempting to receive a second message in response to the first message is configured for the UE and a size of the time window has a value greater than a preconfigured value.

2. The method of claim 1, wherein:
   during the time window, at least one downlink control information (DCI) cyclic redundancy check (CRC) scrambled by a predetermined radio network temporary identifier (RNTI) is received in the target cell.

3. The method of claim 2, wherein:
   based on the second message scheduled by each of the one or more DCIs including a random access preamble identity (RAPID) corresponding to the PRACH, PUSCH is transmitted based on uplink grant information included in the second message.

4. The method of claim 3, wherein:
   the PUSCH transmission is performed regardless of a value of the least significant bits (LSBs) field of the SFN included in the at least one DCI.

5. The method of claim 2, wherein:
   after the first message is transmitted to the base station, the SFN of the target cell is obtained by the UE.

6. The method of claim 5, wherein:
   the SFN of the target cell is obtained based on a master information block (MIB) for the target cell.

7. The method of claim 5, wherein:
   based on a value of the SFN LSBs field included in the DCI received within the time window after the SFN of the target cell is obtained being same as the obtained LSBs of the SFN of the target cell, PUSCH is transmitted based on uplink grant information included in the second message scheduled by the DCI.

8. The method of claim 5, wherein:
   based on a value of the LSBs field of SFN included in each of at least one DCI received within the time window after the SFN of the target cell is obtained being not equal to the obtained LSBs of the SFN of the target cell, the first message is retransmitted.

9. The method of claim 1, wherein:
   based on the second message being not received from the base station during the time window, the first message is retransmitted.

10. The method of claim 1, wherein:
    the command includes a command for indicating handover to the target cell.

11. The method of claim 1, wherein:
    the preconfigured value is 10 ms or more.

12. The method of claim 1, wherein:

the time window is a random access response (RAR) window or a message B (MSGB) window.

13. The method of claim 2, wherein:
the predetermined RNTI is a random access (RA)-RNTI or MSGB-RNTI.

14. The method of claim 1, wherein:
the first message includes the PRACH transmission and PUSCH transmission.

15. The method of claim 14, wherein:
during the time window, at least one DCI CRC scrambled by the MSGB-RNTI are received in the target cell.

16. The method of claim 15, wherein:
based on the second message scheduled by each of the at least one DCI including a RAPID corresponding to the PRACH, HARQ-ACK (hybrid automatic repeat request-acknowledgement) for the second message is transmitted.

17. The method of claim 15, wherein:

after the first message transmission, the SFN of the target cell is obtained, and
based on a value of the LSBs field of SFN included in DCI received within the MSGB window after the SFN of the target cell is obtained being same as the LSBs of the obtained SFN of the target cell, HARQ-ACK for the second message scheduled by the DCI is transmitted.

18. A user equipment (UE) performing a random access procedure in a wireless communication system, the UE comprising:

at least one transceiver for transmitting and receiving radio signals; and
at least one processor for controlling the at least one transceiver,
wherein the at least one processor is configured to:

receive, from a base station through the at least one transceiver, a command for performing the random access procedure for a target cell; and
transmit, to the base station through at least one transceiver, a first message including a physical random access channel (PRACH) before obtaining a system frame number (SFN) of the target cell based on the command,
wherein a time window for attempting to receive a second message in response to the first message is configured for the UE and a size of the time window has a value greater than a preconfigured value.

19. A method for a base station to perform a random access procedure in a wireless communication system, the method comprising:

transmitting, to a user equipment (UE), a command for performing the random access procedure for a target cell; and
receiving, from the UE, a first message including a physical random access channel (PRACH) before obtaining a system frame number (SFN) of the target cell based on the command,
wherein a time window for attempting to receive a second message in response to the first message is configured for the UE and a size of the time window has a value greater than a preconfigured value.

20. A base station performing a random access procedure in a wireless communication system, the UE comprising:

at least one transceiver for transmitting and receiving radio signals; and
at least one processor for controlling the at least one transceiver,
wherein the at least one processor is configured to:

transmit, to a user equipment (UE) through the at least one transceiver, a command for performing the random access procedure for a target cell; and
receiving, from the UE through the at least one transceiver, a first message including a physical random access channel (PRACH) before obtaining a system frame number (SFN) of the target cell based on the command,

wherein a time window for attempting to receive a second message in response to the first message is configured for the UE and a size of the time window has a value greater than a preconfigured value.

21. A processing device configured to control a user equipment (UE) to perform a random access procedure in a wireless communication system, the processing device comprising:

at least one processor; and
at least one computer memory operatively coupled to the at least one processor and storing instructions for performing operations upon being executed by the at least one processor,
wherein the operations comprise:

receiving, from a base station, a command for performing the random access procedure for a target cell; and
transmitting, to the base station, a first message including a physical random access channel (PRACH) before obtaining a system frame number (SFN) of the target cell based on the command,
wherein a time window for attempting to receive a second message in response to the first message is configured for the UE and a size of the time window has a value greater than a preconfigured value.

22. At least one non-transitory computer readable medium storing at least one instruction, wherein:
the at least one instruction executed by at least one processor controls a device which performs a random access procedure in a wireless communication system to perform:

receiving, from a base station, a command for performing the random access procedure for a target cell; and
transmitting, to the base station, a first message including a physical random access channel (PRACH) before obtaining a system frame number (SFN) of the target cell based on the command,
wherein a time window for attempting to receive a second message in response to the first message is configured for the UE and a size of the time window has a value greater than a preconfigured value.

FIG.1

FIG.2

Radio Frame 10ms

Subframe 1ms

Fixed Size

0 | 1 | 2 | 3 | 4 | 5 | 6 | 7 | 8 | 9

Subframe ={1,2,4} Slots

Slot

0 | 1 | 2 | 3

Slot={7,14} Symbols

Symbol

0|1|2|3|4|5|6|7|8|9|10|11|12|13

Size depends on subcarrier spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k,\bar{l})$
- In a resource block, $(k,l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

Freq.

1ms subframe:
14 symbols/slot

12 × 15 KHz

12 × 30 KHz

PRB

12 × 60 KHz

Time

FIG.5

FIG.6

FIG.7

TERMINAL                                          BASE STATION

S710
RANDOM ACCESS PREAMBLE →

S720
← RANDOM ACCESS RESPONSE

S730
DATA TRANSMISSION →

S740
← CONTENTION RESOLUTION MESSAGE

FIG.8

TERMINAL                                                    BASE STATION

RANDOM ACCESS PREAMBLE ALLOCATION — S810

RANDOM ACCESS PREAMBLE — S820

RANDOM ACCESS RESPONSE — S830

FIG.9

(a)

(b)

FIG.10

```
┌─────────────────────────────────┐
│   RECEIVING, FROM A BASE STATION,│
│  A COMMAND FOR PERFORMING A RANDOM│ ~ S1010
│  ACCESS PROCEDURE FOR A TARGET CELL│
└─────────────────────────────────┘
                 │
                 ▼
┌─────────────────────────────────┐
│  TRANSMITTING, TO THE BASE STATION,│
│   A FIRST MESSAGE INCLUDING A PRACH│ ~ S1020
│  BEFORE OBTAINING A SFN OF THE TARGET│
│     CELL BASED ON THE COMMAND    │
└─────────────────────────────────┘
```

FIG.11

```
┌─────────────────────────────────────┐
│      TRANSMITTING, TO THE UE,        │
│  A COMMAND FOR PERFORMING A RANDOM   │ ～ S1110
│  ACCESS PROCEDURE TO THE TARGET CELL │
└─────────────────────────────────────┘
                   │
                   ▼
┌─────────────────────────────────────┐
│      RECEIVING, FROM THE UE,         │
│   A FIRST MESSAGE INCLUDING A PRACH  │ ～ S1120
│   BASED ON THE COMMAND BEFORE THE UE │
│   OBTAINS THE SFN OF THE TARGET CELL │
└─────────────────────────────────────┘
```

FIG.12

FIG.13

First Device 100

Processor(s) 102

Transceiver(s) 106

Memory(s) 104

108

208

Second Device 200

Transceiver(s) 206

Processor(s) 202

Memory(s) 204

## INTERNATIONAL SEARCH REPORT

| International application No. |
| --- |
| **PCT/KR2021/010801** |

| A. CLASSIFICATION OF SUBJECT MATTER |
| --- |
| **H04W 74/08**(2009.01)i; **H04W 74/00**(2009.01)i; **H04W 72/12**(2009.01)i; **H04W 72/14**(2009.01)i; **H04W 36/00**(2009.01)i<br><br>According to International Patent Classification (IPC) or to both national classification and IPC |

| B. FIELDS SEARCHED |
| --- |
| Minimum documentation searched (classification system followed by classification symbols)<br>    H04W 74/08(2009.01); H04W 48/12(2009.01); H04W 72/12(2009.01); H04W 72/14(2009.01); H04W 74/00(2009.01) |
| Documentation searched other than minimum documentation to the extent that such documents are included in the fields searched<br>    Korean utility models and applications for utility models: IPC as above<br>    Japanese utility models and applications for utility models: IPC as above |
| Electronic data base consulted during the international search (name of data base and, where practicable, search terms used)<br>    eKOMPASS (KIPO internal) & keywords: 타겟 셀(target cell), 임의 접속(random access), 시간 윈도우(time window) |

| C. | DOCUMENTS CONSIDERED TO BE RELEVANT | |
| --- | --- | --- |
| Category* | Citation of document, with indication, where appropriate, of the relevant passages | Relevant to claim No. |
| X<br><br>A | KR 10-2020-0018737 A (LG ELECTRONICS INC.) 19 February 2020 (2020-02-19)<br>    See paragraphs [0006]-[0238]. | 1-3,5-6,9-16,18-22<br><br>4,7-8,17 |
| A | ERICSSON. Enhancements to Initial Access Procedures. R1-2005915, 3GPP TSG-RAN WG1 Meeting #1 02-e. e-Meeting. 08 August 2020.<br>    See pages 1-6. | 1-22 |
| A | KR 10-2020-0056472 A (LG ELECTRONICS INC.) 22 May 2020 (2020-05-22)<br>    See paragraph [0102]; and figure 11. | 1-22 |
| A | US 2020-0146054 A1 (COMCAST CABLE COMMUNICATIONS, LLC) 07 May 2020 (2020-05-07)<br>    See claims 1-5. | 1-22 |
| A | US 2018-0132282 A1 (QUALCOMM INCORPORATED) 10 May 2018 (2018-05-10)<br>    See claim 1. | 1-22 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **25 November 2021** | **29 November 2021** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

International application No.

**PCT/KR2021/010801**

| Patent document cited in search report | | | Publication date (day/month/year) | Patent family member(s) | | | Publication date (day/month/year) |
|---|---|---|---|---|---|---|---|
| KR | 10-2020-0018737 | A | 19 February 2020 | CN | 110050506 | A | 23 July 2019 |
| | | | | CN | 110268777 | A | 20 September 2019 |
| | | | | CN | 110870377 | A | 06 March 2020 |
| | | | | EP | 3534666 | A1 | 04 September 2019 |
| | | | | EP | 3537817 | A1 | 11 September 2019 |
| | | | | EP | 3678316 | A1 | 08 July 2020 |
| | | | | JP | 2020-507972 | A | 12 March 2020 |
| | | | | JP | 2020-509693 | A | 26 March 2020 |
| | | | | JP | 6843252 | B2 | 17 March 2021 |
| | | | | KR | 10-2019-0086372 | A | 22 July 2019 |
| | | | | KR | 10-2116682 | B1 | 29 May 2020 |
| | | | | US | 10624136 | B2 | 14 April 2020 |
| | | | | US | 10798751 | B2 | 06 October 2020 |
| | | | | US | 2019-0223223 | A1 | 18 July 2019 |
| | | | | WO | 2019-098770 | A1 | 23 May 2019 |
| | | | | WO | 2019-139298 | A1 | 18 July 2019 |
| | | | | WO | 2019-139299 | A1 | 18 July 2019 |
| KR | 10-2020-0056472 | A | 22 May 2020 | CN | 110050485 | A | 23 July 2019 |
| | | | | CN | 110050485 | B | 11 May 2021 |
| | | | | EP | 3522609 | A1 | 07 August 2019 |
| | | | | EP | 3522609 | B1 | 06 October 2021 |
| | | | | JP | 2020-505842 | A | 20 February 2020 |
| | | | | JP | 6770651 | B2 | 14 October 2020 |
| | | | | KR | 10-2019-0057206 | A | 28 May 2019 |
| | | | | KR | 10-2114622 | B1 | 25 May 2020 |
| | | | | US | 10693592 | B2 | 23 June 2020 |
| | | | | US | 2019-0215101 | A1 | 11 July 2019 |
| | | | | US | 2020-0280395 | A1 | 03 September 2020 |
| | | | | WO | 2019-098767 | A1 | 23 May 2019 |
| US | 2020-0146054 | A1 | 07 May 2020 | CA | 3060828 | A1 | 01 May 2020 |
| | | | | EP | 3648539 | A1 | 06 May 2020 |
| US | 2018-0132282 | A1 | 10 May 2018 | CN | 109892001 | A | 14 June 2019 |
| | | | | CN | 109892001 | B | 17 July 2020 |
| | | | | EP | 3513615 | A1 | 24 July 2019 |
| | | | | EP | 3513615 | B1 | 22 January 2020 |
| | | | | US | 10327265 | B2 | 18 June 2019 |
| | | | | US | 11102820 | B2 | 24 August 2021 |
| | | | | US | 2019-0306893 | A1 | 03 October 2019 |
| | | | | WO | 2018-084995 | A1 | 11 May 2018 |